## Europäisches Patentamt
## European Patent Office
## Office européen des brevets

(19)

(11) Veröffentlichungsnummer: **0 207 473**

**B1**

(12) **EUROPÄISCHE PATENTSCHRIFT**

(45) Veröffentlichungstag der Patentschrift:
19.04.89

(51) Int. Cl.⁴: **C 04 B 24/28,** C 04 B 40/00

(21) Anmeldenummer: 86108816.9

(22) Anmeldetag: 28.06.86

(54) Verfahren zur Herstellung eines Reaktionsharz-Zement-Baustoffgemisches.

(30) Priorität: 01.07.85 DE 3523479

(43) Veröffentlichungstag der Anmeldung:
07.01.87 Patentblatt 87/2

(45) Bekanntmachung des Hinweises auf die Patenterteilung:
19.04.89 Patentblatt 89/16

(84) Benannte Vertragsstaaten:
AT BE CH DE FR GB IT LI NL SE

(56) Entgegenhaltungen:
FR-A-2 119 633
GB-A-1 207 023
US-A-4 047 967
US-A-4 482 381

(73) Patentinhaber: Marohn, Heinz, Am Eichenkamp 13,
D-4150 Krefeld (DE)

(72) Erfinder: Marohn, Heinz, Am Eichenkamp 13,
D-4150 Krefeld (DE)

(74) Vertreter: Bauer, Wulf, Dr., Wolfgang- Müller-
Strasse 12, D-5000 Köln 51 (Marienburg) (DE)

EP 0 207 473 B1

## Beschreibung

Die Erfindung bezieht sich auf ein Verfahren zur Herstellung eines Baustoffgemisches aus einem Reaktionsharz, insbesondere Epoxidharz, einem zugehörigen Härter, Zement, einem grobere und feinere Anteile enthaltenden Zuschlag und Wasser, bei dem zunächst eine erste Gruppe einzelner Bestandteile, darunter das Harz und/oder der Härter, in einer Mischvorrichtung zu einem Vorgemisch vermischt und dieses Vorgemisch gelagert wird und erst später, unmittelbar vor dem Einsatz das Vorgemisch und die restlichen Bestandteile vermischt und ein einsatzbereites Baustoffgemisch erstellt wird.

Bei dem aus der deutschen Offenlegungsschrift DE-OS-2 840 874 bekannten Bindemittelgemisch werden die einzelnen Bestandteile erst bei Erstellung des einsatzfertigen Baustoffgemischs zusammengeführt. Das als Reaktionsharz verwendete Epoxidharz und der Härter liegen als Emulsionen vor, die weder untereinander noch jeweils mit dem Zement vermischt werden dürfen, bevor der Vorgang des Aushärtens bzw. Abbindens tatsächlich einsetzen soll. Es ist somit nicht möglich eine lagerfähige Vormischung des Zements mit entweder dem Harz oder dem Härter, möglicherweise aber auch mit beiden, herzustellen.

Daneben ist aus der US-Patentschrift 3 926 886 eine Epoxidharz- Aminsalzemulsion bekannt, also ein in Emulsion vorliegendes Vorgemisch von Harz und Härter. Der Härter ist chemisch blockiert und wird erst durch Zugabe von Zement aktiviert. Die Vormischung aus Harz und blockiertem Härter ist zwar langzeitlich lagerfähig, sie liegt jedoch nicht in trockener Form vor, die Herstellung einer trockenen Vormischung, der zur Zubereitung des Baustoffgemisches noch die gesamte benötigte Menge an Wasser zugegeben werden muß, ist nicht möglich. Weiterhin werden bei der Aktivierung des Härters Salze gebildet, die im Baustoffgemisch verbleiben und dort stören.

Schließlich sind von Epoxidharz-Herstellern sogenannte Richtrezepturen genannt. Hierbei handelt es sich um Verfahren der eingangsgenannten Art. In einer Richtrezeptur EM 86 eines Herstellers enthält die erste Vormischung 85 Gewichtsteile, im folgenden GT genannt, Rütapox VE 3100 SE Komp. B, 74 GT Wasser, 80 GT Blanc fix N, 95 GT Quarzmehl W 6, 40 GT Quarzmehl W 12, 128 GT Quarzsand 0,1 - 0,4, 150 GT EFA-Füller, 10 GT Titandioxid RN 56 und 6 GT Modifizierungsmittel KW. Die pastösen bis flüssigen Vormischungen A und B werden im Mischungsverhältnis eins zu zwei miteinander vermischt, wenn ein einsatzbereites Baustoffgemisch, hier in Form eines Epoxid-Emulsions-Spachtel, erstellt werden soll.

Nachteilig bei diesem letzteren Baustoffgemisch ist die schlechte Lagerfähigkeit insbesondere der ersten Vormischung. Bei ihr befindet sich ein Teil des Epoxidharzes in unmittelbarem Kontakt mit einem Teil des Zements, wodurch Langzeitreaktionen auftreten Das Harz kann in der stark alkalischen Umgebung inaktiv werden. Das Harz kann Zementkörner zumindest teilweise umhüllen, es ist dann später nicht vom Zementkorn abzulösen. Das Harz kann möglicherweise auch in das Zementkorn irreversibel eindiffundieren. Die Zementkörner können an ihrer Oberfläche durch das Epoxidharz so hydrophobiert werden, daß eine Hydratisation nach Wasserzugabe nicht mehr erfolgen kann. Insgesamt fällt dadurch zumindest ein Anteil der beiden Bindemittel, also Harz und Zement, aus, so daß ein nach einer gewissen Lagerzeit der ersten Vormischung mit dieser hergestelltes Baustoffgemisch nicht mehr dieselben Eigenschaften hat, wie ein nach kurzer Lagerzeit erstelltes Baustoffgemisch. Der Wasserzementwert steigt von 0,5 nach mehreren Monaten Lagerung, zum Beispiel einem halben Jahr Lagerung, auf einen Wert von 1,0 an. Dem Bindemittelverlust kann man dadurch begegnen, daß man von vornherein eine höhere Menge an Reaktionsharz und an Zement zugibt. Hierdurch verteuert sich jedoch der Preis des Baustoffgemisches. Zudem stören die passivierten Harz/Zement-Teilchen im abgebundenen Baustoffgemisch.

Ein Vorteil des Baustoffgemisches nach der genannten Richtrezeptur liegt in der relativ einfachen Herstellung des Baustoffgemisches am Einsatzort. Es müssen lediglich zwei vorbereitete Vormischungen im richtigen Gewichtsverhältnis miteinander vermischt werden, wenn man ein einsatzbereites Baustoffgemisch haben möchte. Für die praktischen Anforderungen im Baustellenbereich ist eine derartige, vereinfachte Zubereitung vorteilhaft, sie schließt Fehlerquellen bei der Mischung weitgehend aus, die eigentlichen Mischvorgänge sind vorverlagert bei industriellen Herstellern.

Ausgehend von dem Verfahren der eingangsgenannten Art ist es Aufgabe der Erfindung, die geschilderten Nachteile dieses Verfahrens zu vermeiden und dieses Verfahren unter Beibehaltung seiner Vorteile dahingehend weiterzuentwickeln, daß die Vormischung rieselfähig ist und über längere Zeitdauer problemlos gelagert werden kann, ohne daß hierdurch ein merklicher Anteil eines Bindemittels verlorengeht. Maßstab für die Lagerfähigkeit der Vormischung ist hierbei die Lagerfähigkeit von Zement, insbesondere von Zementsäcken. Händler und Anwender wissen, daß Zementsäcke über mehrere Monate weitgehend trocken gelagert werden können, ohne daß der Zement merklich nachläßt. Entsprechend sollte auch die Lagerqualität zumindest einer Vormischung, möglichst aber beider Vormischungen des Baustoffgemisches sein. Auch sonst soll möglichst wenig von den bisherigen Abläufen bei der Herstellung rein hydraulischer Baustoffgemische abgewichen werden, es sollen also möglichst dieselben Mischer, eine möglichst artverwandte und nicht erschwerte Zubereitung usw. möglich sein, und die kritischen Mischvorgänge industriell bei der Herstellung des Vorgemischs erfolgen.

Diese Aufgabe wird einerseits dadurch gelöst, daß zur Herstellung eines lagerstabilen trockenen Vorgemisches

-  zunächst die gröberen Anteile von zumindest einer Teilmenge des Zuschlages vorgelegt und mit dem flüssigen Harz oder dem flüssigen Härter so vermischt werden, daß sich Tröpfchen oder Filme des Harzes bzw. Härters auf den Oberflächen der Körner des grobkörnigen Zuschlags adhäsiv anlagern können und

-  anschließend die feineren Anteile des Zuschlages zugegeben und die noch freien Oberflächen der angelagerten Tröpfchen bzw. Filme abgedeckt, insbesondere abgepudert werden.

Das nach diesem Verfahren hergestellte Vorgemisch ist völlig trocken und langzeitig lagerstabil. Es kann wie Zement gelagert werden, bedarf jedenfalls keiner größeren Sorgfalt beim Lagern als in Säcken verpackter Zement. Es kann wie übliche Trocken-Fertigmischungen in einen Mischvorgang eingesetzt werden. Das Harz bzw. der Härter sind feinst verteilt im Zuschlag, der Zuschlag schirmt die einzelnen, sehr kleinen Flüssigkeitströpfchen bzw. Filme voneinander ab. Harz und Härter befinden sich damit bereits in einer für die spätere Mischung sehr günstigen, äußerst dispersen Verteilung im Zuschlag, der bekanntlich volumenmäßig den größten Anteil am späteren, einsatzbereiten Baustoffgemisch hat. Bei dem Mischvorgang zur Herstellung des einsatzbereiten Baustoffgemisches kommt es daher auf eine ausreichende Vermischung von Harz und Härtern nicht mehr an, diese Vermischung ist bereits durch den Herstellvorgang des Vorgemisches vorgegeben. Entscheidend ist, daß die Herstellung des Vorgemisches unter völlig trockenen Bedindungen abläuft. Praktisch die gesamte, zur Herstellung des einsatzbereiten Baustoffgemisches benötigte Wassermenge wird erst bei Herstellung des einsatzbereiten Baustoffgemisches zugegeben. Bei dieser Zugabe von Wasser wird erreicht, daß die flüssigen Harz- und Härterpartikelchen wieder von den Körnern des Zuschlages freikommen und emulgieren.

Das Vorgemisch ist relativ einfach und in derzeit bestehenden Anlagen herstellbar. Bei der Herstellung müssen die Mischvorgänge so durchgeführt werden, daß die an den Kornoberflächen adsorbierten Flüssigkeitsteilchen durch den Mischvorgang nicht wieder abgerieben werden, so daß bereits allseitig umhüllte Flüssigkeitsteilchen nicht wieder aufbrechen, zerschlagen und frei werden. Andererseits muß der Mischvorgang so durchgeführt werden, daß die eingegebene Flüssigkeit, also Harz oder Härter, sich so weitgehend verteilt und in so kleine Einheiten aufgespalten wird, daß bei Füll- und Schüttvorgängen die umkapselten Einheiten intakt bleiben. Die Zerteilung des flüssigen Harzes bzw. flüssigen Härters kann durch den Mischvorgang erfolgen, diese Flüssigkeiten können aber auch in einen Mischer feinstzerteilt eingesprüht werden.

Andererseits wird die genannte Aufgabe dadurch gelöst, daß zur Herstellung eines lagerstabilen, trockenen Vorgemisches

-  zunächst eine Menge an flüssigem Harz oder Härter soweit abgekühlt wird, bis die Menge zu einem Festkörper erstarrt,

-  in diesem Zustand zu Pulver zermahlen wird und

-  mit der feinsten Fraktion des Zuschlages vermischt wird, bevor das pulverförmige Harz bzw. der pulverförmige Härter wieder den flüssigen Zustand erreichen konnte.

Auch das nach diesem Verfahren hergestellte Vorgemisch ist rieselfähig, trocken und langzeitig lagerstabil, es zeigt entsprechende Langzeitlagereigenschaften wie das vorbeschriebene Vorgemisch. Durch den Mahlvorgang sind Harz und/oder Härter feinst pulverisiert, also in kleinste Teilchen aufgespalten. Da der ebenfalls feinpulvrige Zuschlag, beispielsweise in Form von Talkum oder Silikagel, dem noch festen, staubförmigen Harzpulver bzw. Härterpulver zugemischt wird, wird eine innige Vermischung erreicht. Wenn dabei oder später die pulverförmigen Harz- oder Härterteilchen wieder flüssig werden, sind sie von feinpulvrigem Zuschlag umgeben und dadurch voneinander getrennt. Diese räumliche Trennung wird über sehr lange Zeit aufrecht erhalten. An der Grenzfläche zwischen flüssigem Harz bzw. Härter und Zuschlag tritt eine adhäsive, physikalische Verbindung auf, die später, bei Zugabe durch Wasser, wieder gelöst wird. Die Mischvorgänge bei der Herstellung des Vorgemisches müssen so durchgeführt werden, daß die jedes Flüssigkeitsteilchen umhüllende Schale an feinpulvrigem Zuschlagstoff nicht aufgebrochen oder zerstört werden kann. Das so hergestellte Vorgemisch hat den Vorteil, einen nur geringen Raumbedarf zu haben, die eigentlichen, das spätere Volumen des einsatzbereiten Baustoffgemisches bestimmenden Bestandteile, insbesondere die mittleren und groben Anteile des Zuschlages, werden erst auf der Baustelle zugegeben, können also lokal bezogen werden.

Beiden Lösungen ist gemeinsam, daß beim eigentlichen Anwender, also im Baustellenbereich, keine zusätzlichen Mischvorrichtungen benötigt werden und die bisher eingeübten Arbeitsabläufe bei der Herstellung eines rein hydraulischen Baustoffgemisches praktisch unverändert erhalten bleiben.

Da die flüssigen Harz- bzw. Härterteilchen durch den Zuschlag umhüllt sind, also gewissermaßen von einer Schale umgeben sind, ist es möglich, einem so hergestellten, trockenen Vorgemisch bereits Zement zuzumischen. Die Zementkörnchen werden dabei durch die Barriere der Zuschlagkörnchen von den Flüssigkeitströpfchen getrennt, so daß eine hohe Lagerstabilität erreicht wird. Zudem wird der Mischvorgang auf der Baustelle, also beim Herstellen des einsatzbereiten Baustoffgemisches, vereinfacht.

Die Zugabe von Zement zum Vorgemisch hat allerdings den Nachteil, daß der Zementanteil, also insbesondere die Betonqualität, vorgegeben ist. Man kann zwar bei der Herstellung des einsatzbereiten Baustoffgemisches noch Zement zugeben, um ein höherwertiges Baustoffgemisch zu erhalten, bei der Zugabe muß aber sorgfältig berücksichtigt werden, daß die Vormischung bereits einen gewissen Anteil an Zement enthält.

Das Verfahren nach dem Anspruch 4 hat den besonderen Vorteil, daß die exakt dosierte, mengenmäßig richtige Mischung von Härter und Harz bereits in der Vormischung gegeben ist. An der Baustelle, also beim Herstellen des einsatzbereiten Baustoffgemisches, muß nicht mehr darauf geachtet werden, daß die richtige Menge an trockener Vormischung A und die richtige Menge an trockener Vormischung B eingesetzt werden. Man erreicht insgesamt einen praktisch einkomponentigen Baustoff, bei dem Harz und Härter in der mengenmäßig richtigen Zumischung bereits in enger Nachbarschaft nebeneinander sind, aber durch Hüllen aus Zuschlagkörnern voneinander dauerhaft separiert sind. Wird einem derartigen Vorgemisch noch Zement beigegeben, so ist es später bei der Herstellung eines einsatzbereiten Baustoffgemisches lediglich notwendig, nur noch das Wasser zuzugeben. Ein derartiges Trockengemisch läßt sich im praktischen Baustellenbereich, aber auch im Bereich der Baustoffhandlungen, wie handelsüblicher Fertigbaustoff, beispielsweise Trockenfertigmörtel, behandeln, also lagern, zubereiten und verarbeiten.

Will man die das Harz enthaltende Vormischung A und die den Härter enthaltende Vormischung B nicht zu einer trockenen Vormischung vermengen, so ist es vorteilhaft, entsprechend der Lehre des Anspruchs 5, daß in einem Volumen der Vormischung A soviel Harz und im gleichgroßen Volumen der Vormischung B so viel Härter enthalten ist, wie bei der Mischung beider gleichgroßer Volumina für eine vollständige Harz-Härter-Reaktion benötigt wird. Im praktischen Baustellenbereich muß dann lediglich die gleiche Menge an Vorgemisch A und Vorgemisch B in einen Mischer gegeben werden, um unter Zugabe der restlichen Bestandteile ein einsatzbereites Baustoffgemisch erstellen zu können. Es ist also möglich, volumetrisch zu dosieren. Verpackungsmäßig hat dies auch den Vorteil, daß in einem Sack und durch eine dünne Trennwand, beispielsweise Kunststoffolie voneinander getrennt die beiden Vorgemische abgefüllt und gelagert werden können. Sie sind dann räumlich voneinander getrennt, fließen aber beim Öffnen des Sacks und Ausleeren des Sacks in einen Mischer zusammen.

Sehr vorteilhaft ist es, wenn der Zuschlag möglichst inerte Kornoberflächen hat, die kein Eindiffundieren des Harzes bzw. Härters in das Kornvolumen zulassen. Dadurch wird vermieden, daß Harz oder Härter verloren geht. Inerte Kornoberflächen hat beispielsweise Quarzsand.

Sehr vorteilhaft ist es, dem Harz bzw. dem Härter vor der Umhüllung durch die Zuschlagkörnchen einen Emulgator beizumischen, beispielsweise Laurylalkohol. Hierdurch wird das Ablösen der flüssigen Harz- bzw. Härtertröpfchen von den Zuschlagkörnern vereinfacht und sichergestellt, daß stets weitgehend die gesamte Menge an Harz und Härter von den Zuschlagkörnern freikommt. Dieses Ablösen wird auch dadurch begünstigt, daß bei der Herstellung des einsatzbereiten Baustoffgemisches ein Füllstoff zugegeben wird, der in Suspension leicht sauer reagiert, beispielsweise einen pH-Wert von 5 bis 6,9 hat.

Die Erfindung wird im folgenden anhand einiger Beispiele erläutert:

**Beispiel 1** (Spachtelmasse)

60 kg getrockneter Quarzzuschlag der Körnung 0,2 bis 0,6 mm werden in einem Baustellen-Zwangsmischer, zum Beispiel Zyklos, vorgelegt und bei arbeitendem Mischwerkzeug 1,65 kg Epoxidharz (Bisphenol A oder F, 166 AS15) Äquivalentgewicht 180 bis 200, zugegeben. Durch Zwangsmischung wird das Epoxidharz gleichmäßig auf die einzelnen Zuschlagkörner aufgezogen. Anschließend werden 10 kg Quarzmehl, Körnung 0,2 bis 0,3 Millimeter bei ebenfalls laufendem Mischwerkzeug eingegeben, um die freien Harzoberflächen zu pudern und klebfrei zu machen. Zum Abschluß des Mischvorganges werden 30 kg Zement, zum Beispiel PZ 35 F, eingebracht.

Es resultiert ein langzeit-lagerfähiges Vorgemisch A, dem auf der Baustelle nur neben dem Anmachwasser ein Epoxidharz-Härter zugegeben werden muß, zum Beispiel 1,65 kg wasseremulgierbares Polyamin, Äquivalentgewicht 180 bis 200.

Für die Herstellung werden Mischwerkzeuge mit niedriger oder maximal mittelerer Umdrehungsgeschwindigkeit, beispielsweise unter 200 U/min verwendet. Die dabei auftretenden Scherkräfte ziehen das Harz (oder in einer anderen Ausbildung den Härter) in gleichmäßiger Schichtdicke auf die einzelnen Zuschlagkörner auf. Höhere Umdrehungsgeschwindigkeiten und damit auch höhere Energien arbeiten das Harz bzw. den Härter in den Füllstoff ein oder von diesem ab, so daß er nicht mehr so günstig abgelöst und bei der Herstellung des Baustoffgemisches unmittelbar zur Verfügung steht, wie dies wünschenswert ist. Außerdem kann das Harz zerschlagen werden, insbesondere können aber die Zuschlagstoffe zu fein zerteilt werden.

Die Mischreihenfolge ist für die spätere Qualität ebenfalls von hoher Bedeutung. Es ist sehr vorteilhaft, zunächst den Grobzuschlagstoff einer Sieblinie vorzulegen, auf den dann das Harz bzw. der Härter aufgezogen werden. Daran anschließend erfolgt die Zugabe der jeweils nächstfeineren Fraktion, um die freien Harzflächen abzupudern und somit klebfrei zu machen. Der Zement und/oder die hydraulischen Bindemittel sind erst dann in die so erhaltene Trockenmischung einzubringen, wenn das Harz (der Härter) weitgehend abgepudert ist. Dadurch wird eine Diffusion der Harzkomponenten (Härter) in den Zement verhindert, wie oben ausgeführt wurde. Es zeigte sich, daß auch nach mehrmonatiger Lagerung der Wasserzementwert erstellter Baustoffgemische immer noch bei 0,5 lag.

## Beispiel 2 (Mörtel)

Getrockneter Zuschlagstoff aus Einzelkörnungen, Zement und Epoxidharz werden wie folgt gemischt:

50 kg getrockneter Quarzsand der Körnung 1 bis 4 Millimeter werden in einem Zwangsmischer, Umdrehungszahl 200 U/min. vorgelegt und 1,2 kg Epoxidharz, Äquivalentgewicht 180 bis 200 zugegeben. Nach der homogenen Vermischung werden in Reihenfolge weiter zugegeben: 10 kg Körnung 0,5 bis 1,2 Millimeter, 15 kg Körnung 0,2 bis 0,63 Millimeter (Silbersand) und anschließend 25 kg Zement, zum Beispiel PZ 45.

Es resultiert ein lagerfähiges Vorgemisch A, das in Säcken abgefüllt geliefert werden kann. Die Härterformulierung, zum Beispiel 1,25 kg Polyamin, Äquivalentgewicht 180 bis 200, wird auf der Baustelle mit dem Anmachwasser zugegeben.

## Beispiel 3

Das Vorgemisch A gemäß Beispiel 1 oder 2 wird mit folgendem Vorgemisch B vermischt:

250 Gramm einer feinteiligen, gefällten Kieselsäure werden in einem Pflugscharmischer vorgelegt und mit 1 kg Polyamin mit einem durchschittlichen Äquivalentgewicht von 200, das auf 80° erwärmt worden ist, in einem dünnen Strahl bei laufendem Mischwerkzeug gegeben. Nach einer Mischzeit von etwa zehn Minuten ist die Feinstverteilung so weit, daß die Mischung gut riesel- und lagerfähig ist.

Die so erhaltene Vormischung B wird mit der bereits beschriebenen Vormischung A vermischt, der erhaltene, sehr gut lagerfähige Trockenbaustoffe benötigt zu seiner Erhärtung und zu seinem Abbinden lediglich das für den Zement notwendigen Anmachwasser. Ein Mischen auf der Baustelle entfällt. Der Gehalt an feinteiliger Kieselsäure bewirkt ein gutes Standvermögen an senkrechten Flächen, bei geeigneter Sieblinieneinstellung auch in Fugen.

Wie umfangreiche Versuche und Lagertests gezeigt haben, ist es für die Darstellung einer lagerfähigen Epoxidharz-Zement-Zubereitung von außerordentlicher Wichtigkeit, daß eine Diffusion des Epoxidharzes oder des Härters in den Zement verhindert wird. Sogar der direkte Kontakt des Epoxidharzes mit dem Zement ist bei einer Lagerzeit von über sechs Monaten ein kritischer Punkt. Wird die Zubereitung eines Vorgemisches oder des Trockengemisches so gesteuert, daß bei der Herstellung das Epoxidharz direkt in Kontakt mit Zement kommen kann, ist eine Diffusion des Epoxidharzes in den Zement zu erwarten, weiterhin oxidiert das Harz. Durch diesen Effekt, der sich über Monate hinzieht, geht ein Reaktionspartner für den Härter verloren. Auf die Hydrophobierung des Zementkorns wurde bereits hingewiesen. Wird zu einer so aufgebauten Mischung lediglich Wasser zugegeben, erfolgt keine oder eine verschlechterte Hydratisation des Zements und keine Erhärtung. Bei gleichzeitiger Zugabe des Epoxidharzhärters tritt zwar eine leichte Erhärtung auf, die jedoch vollkommen unvollständig ist und als nicht ausreichend beurteilt werden muß.

Kann ein partieller Kontakt zwischen Epoxidharz und Zement stattfinden, so ist durch gleichzeitigen Einfluß von Luftfeuchtigkeit und Sauerstoff eine Polymerisation des Epoxidharzes gegeben. Die bei normalen Trockenbaustoffen üblichen Verpackungsarten gestatten keinen Feuchtigkeitsausschluß, der eine leichte alkalische Reaktion mit dem Zement bewirkt, der dann durch Sauerstoffeinfluß eine katalytische Weitervernetzung des Epoxidharzes auslöst. Wird einer so aufgebauten Mischung lediglich Anmachwasser zugegeben, ist eine Verarbeitung durch die Vernetzung und damit sehr hoher Viskosität des Epoxidharzes nicht mehr oder nur noch sehr schlecht möglich. Wird im Anmachwasser auch die entsprechend dosierte Menge eines wässrigen Polyamins zugegeben, erfolgt die Härtung nur noch sehr unvollständig, da durch die Weitervernetzung des Harzes ein sehr großer und in der Praxis nicht regulierbarer Überschuß an Polyamin vorhanden ist. Selbst bei Einsatz einer optimalen Rezeptur ist durch die Verwendung einer Mischanlage, die sehr starke Energie in das Mischgut einleitet, zum Beispiel ein Pflugscharmischer mit Messerkopf, es nicht möglich, ein lagerstabiles Produkt herzustellen. Die Ursache dafür ist, daß durch die hohe Energieeinleitung der Zement und das Epoxidharz so stark in Kontakt gebracht werden, daß eine wie vorher geschilderte Weiterreaktion stattfindet.

Endscheidend ist, daß bei dem erfindungsgemäßen Baustoffgemisch der Zement das Primärbindemittel bleibt. Es wird beispielsweise nur 5 bis 20 Gewichtsprozent, vorzugsweise 12 Gewichtsprozent Epoxidharz und Härter bezogen auf das Bindemittel Zement eingesetzt. Weiterhin wird ein Harz/Härter-System verwendet, das langsamer aushärtet, als der Zement für seinen Abbindevorgang benötigt. Dadurch stört das Harz die Ausbildung der eigentlichen Zementbindung nicht.

## Patentansprüche

1. Verfahren zur Herstellung eines Baustoffgemisches aus einem Reaktionsharz, insbesondere Epoxidharz, einem zugehörigen Härter, Zement, einem grobere und feinere Anteile enthaltenden Zuschlag und Wasser, bei dem zunächst eine erste Gruppe einzelner Bestandteile, darunter das Harz und/oder der Härter, in einer Mischvorrichtung zu einem Vorgemisch vermischt und dieses Vorgemisch gelagert wird und erst später, unmittelbar vor dem Einsatz das Vorgemisch und die restlichen Bestandteile vermischt und ein einsatzbereites Baustoffgemisch erstellt wird,
dadurch gekennzeichnet, daß zur Herstellung eines lagerstabilen, trockenen Vorgemisches
- zunächst die groberen Anteile von zumindest einer Teilmenge des Zuschlages vorgelegt und mit dem flüssigen Harz oder dem flüssigen Härter so vermischt werden, daß sich Tröpfchen oder Filme des Harzes bzw. Härters auf den Oberflächen der Körner des grobkörnigen Zuschlags adhäsiv anlagern können und
- anschließend die feineren Anteile des Zuschlages zugegeben und die noch freien Oberflächen der angelagerten Tröpfchen bzw. Filme abgedeckt, insbesondere abgepudert werden.

2. Verfahren zur Herstellung eines Baustoffgemisches aus einem Reaktionsharz, insbesondere Epoxidharz, einem zugehörigen Härter, Zement, einem grobere und feinere Anteile enthaltenden Zuschlag und Wasser, bei dem zunächst eine erste Gruppe einzelner Bestandteile, darunter das Harz und/oder der Härter, in einer Mischvorrichtung zu einem Vorgemisch vermischt und dieses Vorgemisch gelagert wird und erst später, unmittelbar vor dem Einsatz das Vorgemisch und die restlichen Bestandteile vermischt und ein einsatzbereites Baustoffgemisch erstellt wird,
dadurch gekennzeichnet, daß zur Herstellung eines lagerstabilen trockenen Vorgemisches
- zunächst eine Menge an flüssigem Harz oder Härter soweit abgekühlt wird, bis die Menge zu einem Festkörper erstarrt,
- in diesem Zustand zu Pulver zermahlen wird und
- mit der feinsten Fraktion des Zuschlages vermischt wird, bevor das pulverförmige Harz bzw. der pulverförmige Härter wieder den flüssigen Zustand erreichen konnte.

3. Verfahren nach Anspruch 1 oder 2, dadurch gekennzeichnet, daß nach der Vermischung von Harz bzw. Härter und Zuschlag und wenn die Oberflächen der Tröpfchen bzw. Filme abgedeckt sind, abschließend der Zement zugemischt wird und das so erhaltene Vorgemisch gelagert wird.

4. Verfahren nach einem der Ansprüche 1 bis 3, dadurch gekennzeichnet, daß
- eine trockene Vormischung A aus dem Harz und einer Teilmenge des Zuschlags erstellt wird,
- aus dem Rest des Zuschlags und dem Härter durch Vermischen eine trockene Vormischung B erstellt wird und
- anschließend die Vermischung A und die Vormischung B zu einem trockenen, lagerfähigen Trockengemisch miteinander vermischt werden.

5. Verfahren nach einem der Ansprüche 1 bis 4, dadurch gekennzeichnet, daß in einem Volumen von Vorgemisch A soviel Harz und im gleich großen Volumen von Vorgemisch B soviel Härter enthalten ist, wie bei Mischung der beiden gleich großen Volumina eine vollständige Harz-Härter-Reaktion benötigt wird.

6. Verfahren nach einem der Ansprüche 1 bis 5, dadurch gekennzeichnet, daß ein Zuschlag mit möglichst inerten Kornoberflächen, die kein Eindiffundieren des Harzes bzw. Härters in das Kornvolumen zulassen, verwendet wird.

7. Verfahren nach einem der Ansprüche 1 bis 6, dadurch gekennzeichnet, daß bei den Mischvorgängen niedrige und mittlere Umdrehungsgeschwindigkeiten eingehalten werden, so daß geringe Scherkräfte auftreten und die Berührungsflächen zwischen Harz- bzw. Härterflüssigkeitsteilchen und dem Zuschlag durch den Mischvorgang nicht zerstört oder zerschlagen werden und insbesondere der Zuschlag beim Mischen nicht zerkleinert wird.

8. Verfahren nach einem der Ansprüche 1 bis 7, dadurch gekennzeichnet, daß Harz und/oder Härter vor dem Vermischen mit dem Zuschlag ein Emulgator beigemischt wird.

9. Verfahren nach einem der Ansprüche 1 bis 8, dadurch gekennzeichnet, daß der Gewichtsanteil des Harz/Härter-Systems 5 bis 20 Gewichtsprozent, vorzugsweise 12 Gewichtsprozente bezogen auf das Gewicht des Zements beträgt.

10. Verfahren nach einem der Ansprüche 1 bis 9, dadurch gekennzeichnet, daß ein Harz/Härter-System verwendet wird, das langsamer aushärtet als der Zement für seinen Abbindevorgang benötigt.

## Claims

1. Process for manufacturing a construction material mixture from a reaction resin, in particular epoxy resin, an appropriate hardener, cement, and an additive containing coarser and finer proportions, and water:

wherein firstly a first group of individual constituents, among these the resin and/or the hardener, is mixed in a mixing apparatus to form a premixture, and this premixture is stored and not until later, directly before use, is the premixture and the remainder of the constituents mixed and a construction material mixture is produced, ready for use,

characterised in that, for manufacturing a dry premixture which is stable in storage

- firstly, the coarser proportions of at least a partial quantity of the additive are put in, and are mixed with the fluid resin or with the fluid hardener, in such a way that droplets or films of the resin and/or hardener can accumulate adhesively on the surfaces of the grains of the coarse-grained additive, and

- subsequently the finer proportions of the additive are added, and the surfaces of the accumulated droplets and/or films which still remain uncovered are covered, in particular powdered over.

2. Process for manufacturing a construction material mixture from a reaction resin, in particular epoxy resin, an appropriate hardener, cement, an additive containing coarser and finer proportions, and water;

wherein firstly a first group of individual constituents, among these the resin and/or the hardener, is mixed in a mixing apparatus to form a premixture, and this premixture is stored, and not until later, directly before use, is the premixture and the remainder of the constituents mixed and a construction material mixture is produced, ready for use,

characterised in that, for manufacturing a dry premixture which is stable in storage

- firstly, a quantity of fluid resin or hardener is cooled sufficiently until the quantity solidifies to form a solid body,

- in this condition it is ground to powder, and

- is mixed with the finest fraction of the additive, before the resin in powder form and/or the hardener in powder form could return into the fluid state.

3. Process according to claim 1 or 2, characterised in that after the mixing of resin and/or hardener and additive, and when the surfaces of the droplets and/or films are covered, finally the cement is mixed in and the premixture thus obtained is stored.

4. Process according to any one of the claims 1 to 3, characterised in that

- a dry premixture A is prepared from the resin and from a partial quantity of the additive,

- a dry premixture B is prepared from the remainder of the additive and from the hardener, by mixing, and

- subsequently the premixture A and the premixture B are mixed together to form a dry mixture which is dry and stable in storage.

5. Process according to any one of the claims 1 to 4, characterised in that in a volume of premixture A, such an amount of resin is contained, and in an equal-sized volume of premixture B, such an amount of hardener is contained, as is necessary to bring about a complete resin-hardener reaction when the two equal-sized volumes are mixed.

6. Process according to any one of the claims 1 to 5, characterised in that an additive is used which has the most inert possible grain surfaces which permit no diffusing-in of the resin and/or of the hardener into the grain volume.

7. Process according to any one of the claims 1 to 6, characterised in that in the mixing processes, low and medium rotation speeds are maintained, so that low shearing forces occur, and the contact surfaces between resin fluid particles, and/or hardener fluid particles. and the additive, are not destroyed or broken by the mixing process, and in particular the additive is not pulverised during the mixing.

8. Process according to any one of the claims 1 to 7, characterized in that an emulsifier is mixed with the resin and/or hardener. before the mixing with the additive.

9. Process according to any one of the claims 1 to 8, characterised in that the proportion by weight of the resin/hardener system amounts to 5 to 20 per cent by weight, preferably 12 per cent by weight, in relation to the weight of the cement.

10. Process according to any one of the claims 1 to 9, characterised in that a resin/hardener system is used, which hardens more slowly than the time the cement requires for its setting process.

## Revendications

1. Procédé de fabrication d'un mélange de matériaux pour construction se composant d'une résine de réaction, notamment une résine époxyde, d'un durcisseur associé, de ciment, d'un agrégat contenant des parties grossières et fines et d'eau, selon lequel initialement un premier groupe de différents constituants, parmi lesquels la résine et/ou le durcisseur, sont mélangés dans un dispositif mélangeur sous la forme d'un pré-mélange et ce pré-mélange est stocké puis ultérieurement, immédiatement avant l'utilisation, le pré-mélange et les constituants restants sont mélangés et un mélange de matériaux pour construction prêt à l'utilisation est formé, caractérisé en ce que, pour la préparation d'un pré-mélange sec et stable au stockage:

- initialement les parties grossières d'au moins une quantité partielle de l'agrégat sont tenues à disposition et sont mélangées avec la résine liquide ou avec le durcisseur liquide de telle sorte que des gouttelettes ou des films de la résine ou du durcisseur puissent se déposer et adhérer sur les surfaces des grains de l'agrégat de granulométrie grossière, et

- ensuite les parties plus fines de l'agrégat sont ajoutées et les surfaces encore libres des gouttelettes ou des films existants sont recouvertes, notamment par saupoudrage.

2. Procédé de fabrication d'un mélange de matériaux pour construction se composant d'une résine de réaction, notamment une résine époxyde, d'un durcisseur associé, de ciment, d'un agrégat contenant des parties grossières et fines et d'eau, selon lequel initialement un premier groupe de différents constituants, parmi lesquels la résine et/ou le durcisseur, sont mélangés dans un dispositif mélangeur sous la forme d'un pré-mélange et ce pré-mélange est stocké puis ultérieurement, immédiatement avant l'utilisation, le pré-mélange et les constituants restants sont mélangés et un mélange de matériaux pour construction prêt à l'utilisation est formé, caractérisé en ce que, pour la préparation d'un pré-mélange sec et stable au stockage:

- initialement une quantité de résine ou de durcisseur liquide est refroidie jusqu'à ce que cette quantité soit solidifiée sous la forme d'un corps solide,
- dans cet état le corps est broyé sous forme d'une poudre, et
- il est mélangé avec la fraction la plus fine de l'agrégat, avant que la résine sous forme pulvérulente ou bien le durcisseur sous forme pulvérulente puisse à nouveau atteindre l'état liquide.

3. Procédé selon la revendication 1 ou 2, caractérisé en ce que, après le mélange de la résine ou du durcisseur et de l'agrégat et quand les surfaces des gouttelettes ou des films sont recouvertes, finalement le ciment est ajouté au mélange et le pré-mélange ainsi obtenu est stocké.

4. Procédé selon une des revendications 1 à 3, caractérisé en ce que:

- un pré-mélange sec A est préparé à partir de la résine et d'une quantité partielle de l'agrégat,
- à partir du reste de l'agrégat et du durcisseur, un pré-mélange sec B est préparé par une étape de mélange, et
- ensuite le pré-mélange A et le pré-mélange B sont melangés entre eux pour produire un mélange sec et apte au stockage.

5. Procédé selon une des revendications 1 à 4, caractérisé en ce qu'un volume donné du pré-mélange A et un volume identique du pré-mélange B contiennent respectivement autant de résine et autant de durcisseur que ce qui est nécessaire pour produire, lors du mélange des deux volumes identiques, une réaction complète résine-durcisseur.

6. Procédé selon une des revendications 1 à 5, caractérisé en ce qu'on utilise un agrégat comportant des surfaces de grains aussi inertes que possible et qui ne permettent aucune pénétration par diffusion de la résine ou du durcisseur dans le volume des grains.

7. Procédé selon une des revendications 1 à 6, caractérisé en ce que, lors des étapes de mélange, des vitesses de rotation basses et moyennes sont maintenues de telle sorte qu'il se produise de faibles forces de cisaillement, que les surfaces de contact entre les particules liquides de résine ou de durcisseur et l'agrégat ne soient pas détruites ou désagrégées par le processus de mélange et que notamment l'agrégat ne soit pas désagrégé lors du mélange.

8. Procédé selon une des revendications 1 à 7, caractérisé en ce qu'on mélange un émulsionnant à la resine et/ou au durcisseur avant le mélange avec l'agrégat.

9. Procédé selon une des revendications 1 à 9, caractérisé en ce que la proportion pondérale du système résine/durcisseur s'élève à 5 à 20 % en poids, de préférence 12 en poids, par rapport au poids du ciment.

10. Procédé selon une des revendications 1 à 9, caractérisé en ce qu'on utilise un système résine/ durcisseur qui durcit plus lentement que ce qui est nécessaire au ciment pour son processus de prise.